# DEMANDE DE BREVET EUROPEEN

(11) **EP 1 637 951 A1**
(43) Date de publication de la demande: **22.03.2006**
(21) Numéro de dépôt: 04104493.4
(22) Date de dépôt: 16.09.2004
(51) Int. Cl.: G05D 16/04

(54) **Dispositif de détente de gaz sous haute pression**

(71) Demandeur: LUXEMBOURG PATENT COMPANY S.A., 7440 Lintgen (LU)
(72) Inventeur: Kremer, Paul, 7263 Walferdange (LU); Risse, M. Claude, 57310 Bertrange (FR)
(74) Mandataire: Weydert, Robert

(57) **Abrégé**

Le dispositif de détente de gaz sous haute pression comporte une enveloppe tubulaire (1) dans laquelle deux unités de détendeur modulaires (D₁, D₂) sont disposées et retenues. Chaque unité de détendeur modulaire comporte un piston mobile (4) par rapport à un siège de piston en vue de régler la pression de gaz dans une chambre de sortie commune (C_{BP}) délimitée dans l'enveloppe tubulaire entre les deux unités de détendeur modulaires. Les deux unités de détendeur modulaires sont arrangées en vue de fonctionner en parallèle et sont montées dans l'enveloppe tubulaire en sens opposé avec leur piston orientés face-à-face. Un orifice de sortie basse pression (O_{BP}) en communication avec la chambre de sortie commune est formée dans l'enveloppe tubulaire.

## Description

L'invention se rapporte à un dispositif de détente de gaz sous haute pression, en particulier un dispositif de détente de gaz pour un système d'alimentation de gaz vers un moteur à combustion interne d'un véhicule, et notamment d'un grand véhicule tel qu'un camion ou un autobus demandant un débit de gaz relativement élevé.

Dans la technique antérieure des détendeurs sont connus à étage unique ou à deux étages de détente qui sont souvent d'une construction compliquée et qui demandent beaucoup de place, en particulier s'il devient nécessaire de prévoir deux détendeurs en parallèle entre une source de gaz et le moteur de combustion pour satisfaire à un débit d'alimentation de gaz relativement élevé. Egalement connue dans l'état de la technique est une unité de détendeur modulaire à étage de détente unique à faibles dimensions et de construction simple, appropriée pour le gaz naturel comprimé (GNC), qui a été fixée par des vis dans un boîtier en tant qu'une unité et de façon amovible.

Le but de la présente invention est de prévoir un dispositif de détente de gaz sous haute pression, en particulier pour un grand moteur à combustion interne exigeant une alimentation de gaz relativement élevée, qui est d'une construction simple et peut être installée dans un espace restreint.

Pour atteindre ce but il est prévu selon l'invention un dispositif de détente de gaz sous haute pression comportant une enveloppe tubulaire et deux unités de détendeur modulaires disposées et retenues dans l'enveloppe tubulaire ; chaque unité de détendeur modulaire comportant un piston mobile par rapport à un siège de piston en vue de régler la pression de gaz dans une chambre de sortie commune délimitée dans l'enveloppe tubulaire entre les deux unités de détendeur modulaires ; les deux unités de détendeur modulaires étant arrangées en vue de fonctionner en parallèle, et étant montées dans l'enveloppe tubulaire en sens opposé avec leurs pistons orientés face-à-face ; et l'enveloppe tubulaire ayant un orifice de sortie basse pression en communication avec la chambre de sortie commune.

Selon un mode d'exécution de l'invention les deux unités de détendeur modulaire sont réglées chacune à une pression différente et chacune des unités de détendeur modulaires comporte un détendeur à étage unique.

De préférence chaque unité de détendeur est retenue dans l'enveloppe par un anneau élastique et chaque unité de détendeur est libre de tourner autour d'un axe longitudinal dans l'enveloppe tubulaire, chaque unité de détendeur étant maintenue en engagement avec son anneau de retenue élastique par la pression de gaz dans la chambre de sortie commune. Par cette caractéristique un conduit de gaz haute pression peut être fixé à l'unité de détendeur modulaire sans y appliquer une force de torsion ou un couple risquant d'écraser les joints d'étanchéité de l'unité de détendeur modulaire. Bien entendu, après le raccordement du conduit d'alimentation de gaz haute pression l'unité de détendeur modulaire n'est plus libre de tourner dans l'enveloppe tubulaire.

Chaque unité de détendeur modulaire comporte de préférence un corps de détendeur, un piston mobile et un soufflet dont une extrémité est solidarisée de façon étanche au piston et dont l'autre extrémité est solidarisée de façon étanche au corps de détendeur. Un espace interne est délimité entre le corps de détendeur, le piston et le soufflet et le corps de détendeur est pourvu d'un orifice en communication avec cet espace interne pour l'évacuation ou la canalisation de fuites de gaz pouvant s'accumuler dans l'espace interne.

Les unités de détendeur modulaires sont montées dans l'enveloppe tubulaire de façon étanche à la pression du gaz dans la chambre de sortie commune.

Selon un autre aspect de l'invention une seul détendeur du type précité peut être disposé dans une enveloppe tubulaire fermée à l'une de ses extrémités, par exemple par une paroi ou cloison radiale, et pourvue près de son autre extrémité d'un anneau élastique pour retenir le détendeur dans l'enveloppe tubulaire. Dans ce cas le détendeur est monté avec son piston orienté vers l'extrémité fermée de l'enveloppe tubulaire et la chambre basse pression est délimitée entre l'extrémité fermée de l'enveloppe tubulaire et le détendeur. Ce détendeur unique peut librement tourner dans l'enveloppe tubulaire ce qui permet d'éviter l'écrasement des joints d'étanchéités lors du raccordement du détendeur à la source de gaz haute pression.

L'invention sera maintenant expliquée en plus grand détail en référence aux dessins annexés, sur lesquels :
La figure 1 est une représentation en coupe longitudinale et à l'échelle 1:1 d'un dispositif de détente comportant deux unités de détente modulaires à étage unique disposées en parallèle dans une enveloppe tubulaire,
La figure 2 est une vue de face d'une extrémité du dispositif de la figure 1 ; et
La figure 3 est une vue agrandie à l'échelle 2:1 de l'unité de détente modulaire disposé dans l'enveloppe tubulaire, dont seulement une partie est représentée.

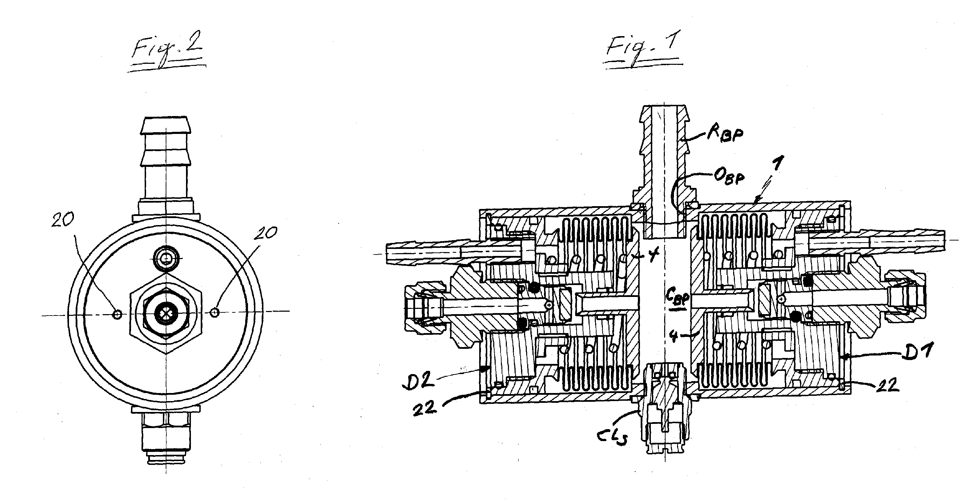

Revenant à la figure 1, un dispositif de détente de gaz GNC 200 bar est représenté comportant deux unités de détente modulaires ou autonomes désignées ci-après par détendeur D1 et D2. Ces deux détendeurs D1 et D2 sont disposés et retenus dans une enveloppe tubulaire ou tube cylindrique 1 et sont installés dans ce tube cylindrique 1 par les extrémités opposées de celui-ci et chaque détendeur est retenu dans ce tube 1 par un anneau élastique 22 engagé dans une rainure pratiquée à proximité de l'une des extrémités du tube 1. Les deux détendeurs D1 et D2 sont arrangés en vue de fonctionner en parallèle entre une source de gaz (non-représentée) et un moteur à combustion interne (non-représenté). Les deux détendeurs D1 et D2 sont montés de façon étanche à la pression de gaz dans une chambre de sortie commune C_{BP} (chambre basse pression) délimitée dans le tube 1 entre les deux détendeurs D1 et D2. En fait, les détendeurs D1 et D2 sont montés dans le tube 1 avec leurs pistons 4 orientés face-à-face. Le tube 1 est aussi pourvu entre ces extrémités d'un orifice de sortie basse pression O_{BP} dans lequel un raccord basse pression R_{BP} est fixé. Dans un autre orifice du tube 1 prévu entre ces extrémités est un clapet de sûreté CL_{S} communiquant avec la chambre de sortie commune C_{BP}.

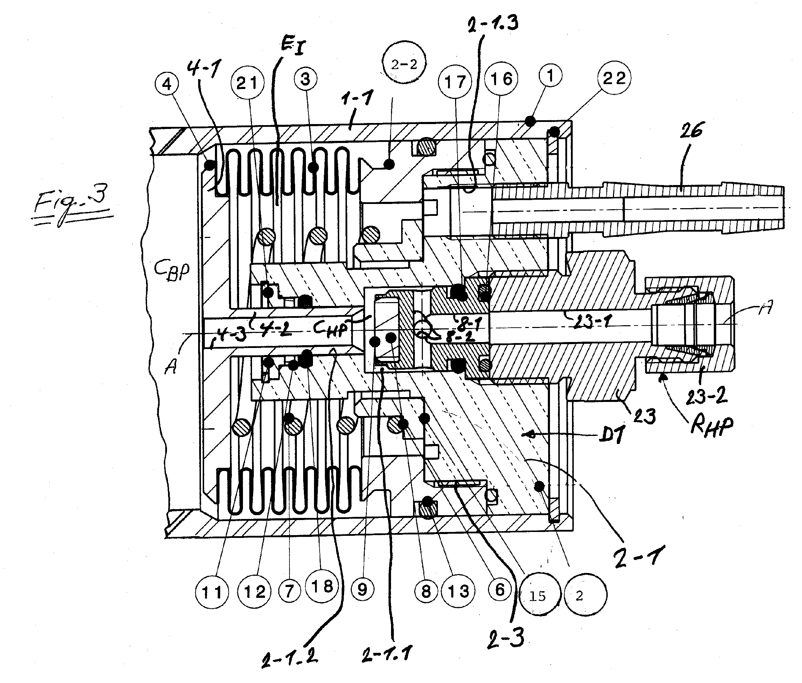

Les deux détendeurs D1 et D2 sont généralement identiques à l'exception d'être réglés à deux pressions différentes, par exemple le détendeur D1 est réglé à 3,2 bar et le détendeur D2 est réglé à 2,8 bar. Parce que les deux détendeurs sont généralement identiques, seulement l'un de ces deux détendeurs sera maintenant décrit en plus grand détail en référence à la figure 3, qui représente le détendeur D1 monté dans la moitié droite du tube 1.

Le détendeur D1 comporte un corps 2 auquel un ensemble de raccord haute pression R_{HP} est fixé, un piston 4, un siège de piston 8 avec une pastille 9, un ressort 7 et un soufflet 3 disposé autour du ressort et solidarisé étanche de l'un côté au piston 4 est de l'autre côté au corps 2. Ces pièces formant le détendeur D1 sont concentriques autour d'un axe longitudinal A-A à qui est aussi l'axe longitudinal du tube 1. Le détendeur D1 est généralement cylindrique et l'une de ses extrémités est formée par une face d'extrémité du piston 4 alors que l'autre extrémité opposée est formée par une face d'extrémité du corps 2.

Le corps 2 du détendeur D1 se compose du support 2-1 de l'ensemble de raccord basse pression 23 et du support-soufflet 2-2. Ces deux support 2-1 et 2-2 sont fixés ensemble par un engagement fileté 2-3.

Le support 2-1 de l'ensemble de raccord haute pression R_{HP} comporte un alésage central longitudinal 2-1.1 qui le traverse totalement d'une extrémité à l'autre. Le piston 4 est pourvu d'une tête de piston 4-1 et d'une tige de piston 4-2 logée dans une partie à petit diamètre 2-1.2 de l'alésage central 2-1.1. L'alésage central 2-1.1 est contre-alésé à deux diamètres différents entre cette partie à petit diamètre 2-1.2 et son extrémité orientée vers la tête 4-1 du piston 4. Dans le contre-alésage à petit diamètre se trouve une bague d'étanchéité torique 18 et une bague anti-extrusion 12. Ces deux bagues 12, 18 sont retenues par une rondelle d'appui 11 qui est retenue à son tour par un anneau élastique 21 engagé dans une rainure pratiquée dans l'alésage à grand diamètre.

Sur l'autre côté de la partie à petit diamètre 2-1.2 de l'alésage longitudinal central 2.1.1 se trouvent également deux contre-alésages à diamètres différents. L'ensemble de raccord haute pression R_{HP} comporte un raccord 23 vissé dans le contre-alésage à grand diamètre et retenant le siège de piston 8 dans l'alésage à petit diamètre. Le raccord haute pression 23 a un passage d'amené central 23-1 qui est en communication avec un passage central 8-1 du siège de piston 8. Le passage central 8-1 du siège de piston 8 est en communication avec une chambre haute pression C_{HP} par deux alésages radiaux 8-2 formés dans le siège de piston 8. Le siège de piston 8 est pourvu d'une pastille d'étanchéité 9. L'extrémité libre de la tige 4-2 du piston 4 est plus ou moins éloignée de la pastille 9 en position ouverte du détendeur D1 et engage la pastille 9 de façon étanche en position fermée du détendeur D1. Le piston 4 est traversé totalement d'une extrémité à l'autre d'un passage central axial 4-3 qui place la chambre haute pression C_{HP} en communication avec la chambre basse pression C_{BP} (figure 1).

Un joint d'étanchéité torique 16 se trouve entre le raccord haute pression 23 et le siège de piston 8 et un autre joint d'étanchéité torique 17 se trouve entre le siège de piston 8 et la partie contre-alésée de l'alésage 2-1.1 dans lequel le siège de piston 8 est disposé.

Un ressort de compression hélicoïdal 7 entoure une partie à petit diamètre du support 2-1. Une extrémité du ressort 7 est en engagement avec la tête 4-1 du piston 4 et son autre extrémité repose sur un support-ressort 6. Le support-ressort 6 est reçu autour de la partie à petit diamètre du support 2-1 et il est en engagement avec une épaule radiale de ce support 2-1 prévu entre la partie à petit diamètre du support 2-1 et une partie à diamètre intermédiaire de celui-ci.

Un soufflet métallique 3 est solidaire d'un côté de la tête 4-1 du piston 4 et de l'autre côté du support-soufflet 2-2 qui est vissé sur la partie de diamètre intermédiaire du support 2-1 et qui est en engagement avec une épaule radiale prévue entre la partie de diamètre intermédiaire du support 2-1 et une partie à grand diamètre de ce support 2-1. La partie à grand diamètre du support 2-1 a un diamètre sensiblement égal au diamètre interne du tube 1, ce qui vaut également pour le diamètre externe du support-soufflet 2-2. Un joint d'étanchéité torique 13 se trouve dans une rainure du support-soufflet 2-2 en vue d'empêcher une fuite de la chambre basse pression C_{BP} entre la surface interne du tube 1 et la surface externe du support-soufflet 2-2 et entre la surface interne du tube 1 et la surface externe du support 2-1. Un autre joint d'étanchéité torique 15 se trouve entre les supports 2-1 et 2-2.

Le soufflet 3 est disposé autour du ressort hélicoïdal 7 fermant un espace interne E_{I} délimité par les deux supports 2-1, 2-2, le piston 4 et le soufflet 3. Un trou axial 2-1.3 est pratiqué dans le support 2-1 radialement à l'extérieur de l'alésage central longitudinal 2-1.1 et ce trou 2-1.3 est en communication avec l'espace interne E_{I} du détendeur D1. Un raccord 26 est vissé dans le trou 2-1.3 en vue d'évacuer les fuites de gaz pouvant s'accumuler dans l'espace E_{I}.

Dans un mode d'exécution, le piston 4 et le support 2-2 ainsi que le soufflet 3 sont fabriqués en acier inoxydable. Le support 2-1 et le siège de ressort 6 sont fabriqués en laiton. Le tube 1 est fabriqué en aluminium. D'autres matériaux peuvent être prévus.

Parce ce que le détendeur D1 peut tourner librement dans le tube 1, un conduit de gaz haute pression (non-représenté) peut être connecté au raccord haute pression 23 sans risque d'écrasement de la bague torique 16. En effet, il faut retenir le raccord haute pression 23 à l'aide d'une clé contre mouvement de rotation lorsque l'écrou-raccord 23-2 est serré pour raccorder le conduit de gaz haute pression (non-représenté) .

Le détendeur D1 est pourvu de deux vis de réglage 20 (voir figure 2) disposées dans des trous axiaux du support 2-1. Ces vis de réglage viennent s'appuyer sur le support-ressort 6 en vue de régler la force appliquée par le ressort 7 au piston 4.

Il reste encore à mentionner que dans un mode d'exécution les dimensions de l'ensemble de détente sont très petites, en fait, la longueur totale du tube 1 mesurée entre ses extrémités est environ 115 mm est le diamètre externe du tube est environ 60 mm.

Il est encore noté que l'extrémité à grand diamètre du support-raccord basse pression 2-1 des détendeurs D1 et D2 représentés sur la figure 1 est reçue totalement dans le support-soufflet, alors que pour le détendeur D1 de la figure 3 la partie à grand diamètre du support-raccord haute pression 2-1 se trouve à l'extérieur du support-soufflet 2-2 et est en engagement avec la surface interne du tube 1.

D'autres modifications peuvent être apportées par les spécialistes aux modes d'exécution représentés sur les dessins et décrits ci-avant sans pour autant quitter la portée des revendications annexées.

## Revendications

1. Dispositif de détente de gaz sous haute pression comportant une enveloppe tubulaire et deux unités de détendeur modulaires disposées et retenues dans l'enveloppe tubulaire ;
chaque unité de détendeur modulaire comportant un piston mobile par rapport à un siège de piston en vue de régler la pression de gaz dans une chambre de sortie commune délimitée dans l'enveloppe tubulaire entre les deux unités de détendeur modulaires ;
les deux unités de détendeur modulaires étant arrangées en vue de fonctionner en parallèle, et étant montées dans l'enveloppe tubulaire en sens opposé avec leurs pistons orientés face-à-face ; et
l'enveloppe tubulaire ayant un orifice de sortie basse pression en communication avec la chambre de sortie commune.

2. Dispositif de détente selon la revendication 1, **caractérisé en ce que** les deux unités de détendeur modulaires sont réglés chacune à une pression différente.

3. Dispositif de détente selon la revendication 1 ou 2, **caractérisé en ce que** chacune des unités de détendeur modulaires comporte un détendeur à étage unique.

4. Dispositif de détente selon l'une quelconque des revendication 1 à 3, **caractérisé en ce que** chaque unité de détendeur est retenue dans l'enveloppe par un anneau élastique et est libre de tourner autour d'un axe longitudinal dans l'enveloppe tubulaire, chaque unité de détendeur étant maintenue en engagement avec son anneau de retenue élastique par la pression de gaz dans la chambre de sortie commune.

5. Dispositif de détente selon l'une des revendications précédentes, **caractérisé en ce que** chaque unité de détendeur modulaire comporte un corps de détendeur par rapport auquel le piston est mobile et un soufflet dont une extrémité est solidarisée de façon étanche au piston et l'autre extrémité est solidarisée de façon étanche au corps de détendeur, un espace interne étant délimité entre le corps de détendeur, le piston et le soufflet, et le corps étant pourvu d'un orifice en communication avec cet espace interne pour l'évacuation des fuites de gaz éventuelles de cet espace.

6. Dispositif de détente selon l'une des revendications précédentes, **caractérisé en ce qu'**un clapet de sécurité en communication avec la chambre de sortie est fixé à l'enveloppe tubulaire.

7. Dispositif de détente selon l'une des revendications précédentes, **caractérisé en ce que** les deux unités de détendeur modulaire sont montées dans l'enveloppe tubulaire de façon étanche à la pression du gaz dans la chambre de sortie commune.

8. Dispositif de détente de gaz sous haute pression comportant une enveloppe tubulaire fermée à l'une de ces extrémités et une unité de détendeur modulaire disposée et retenue dans l'enveloppe tubulaire ;
ladite unité de détendeur modulaire comportant un piston mobile par rapport à un siège de piston en vue de régler la pression de gaz dans un chambre de sortie délimitée dans l'enveloppe tubulaire entre son extrémité fermée et l'unité de détendeur tubulaire ;
l'unité de détendeur modulaire est retenue dans l'enveloppe par un anneau élastique prévu dans l'enveloppe tubulaire près de son extrémité opposée à l'extrémité fermée de sorte que l'unité de détendeur soit libre de tourner dans l'enveloppe tubulaire ; et
un orifice de sortie basse pression en communication avec la chambre de sortie est prévu à l'extrémité fermée de l'enveloppe tubulaire.

9. Dispositif de détente selon la revendication 8, **caractérisé en ce que** l'unité de détendeur modulaire comporte un détendeur à étage unique.

10. Dispositif de détente selon la revendication 8 ou 9, **caractérisé en ce que** l'unité de détendeur modulaire est montée dans l'enveloppe tubulaire de façon étanche à la pression du gaz dans la chambre de sortie.

11. Dispositif de détente selon l'une des revendications 8 à 10, **caractérisé en ce que** l'unité de détendeur modulaire comporte un corps de détendeur par rapport auquel le piston est mobile et un soufflet dont une extrémité est solidarisée de façon étanche au piston et l'autre extrémité est solidarisée de façon étanche au corps de détendeur, un espace interne étant délimité entre le corps de détendeur, le piston et le soufflet, et le corps étant pourvu d'un orifice en communication avec cet espace interne pour l'évacuation des fuites de gaz éventuelles de cet espace.

12. Dispositif de détente selon l'une quelconque des revendications 8 à 11, **caractérisé en ce qu'**un clapet de sécurité en communication avec la chambre de sortie est fixé à l'extrémité fermée de l'enveloppe tubulaire.
